(19)

**Europäisches Patentamt**
**European Patent Office**
**Office européen des brevets**

(11) **EP 3 897 187 B1**

(12) **EUROPEAN PATENT SPECIFICATION**

(45) Date of publication and mention
of the grant of the patent:
**26.06.2024 Bulletin 2024/26**

(21) Application number: **19829097.5**

(22) Date of filing: **17.12.2019**

(51) International Patent Classification (IPC):
$A23K\ 20/158^{(2016.01)}$    $A23K\ 50/10^{(2016.01)}$
$A23K\ 40/35^{(2016.01)}$

(52) Cooperative Patent Classification (CPC):
**A23K 20/158; A23K 40/35; A23K 50/10**

(86) International application number:
**PCT/EP2019/085646**

(87) International publication number:
**WO 2020/127263 (25.06.2020 Gazette 2020/26)**

(54) **RUMEN PROTECTED MATRIX FOR ANIMAL FEED, USE AND PROCESS**

PANSENGESCHÜTZTE MATRIX FÜR TIERFUTTER, VERWENDUNG UND VERFAHREN

MATRICE PROTÉGÉE CONTRE LA DÉGRADATION RUMINALE POUR L'ALIMENTATION
ANIMALE, UTILISATION ET PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2018 EP 18275187**

(43) Date of publication of application:
**27.10.2021 Bulletin 2021/43**

(73) Proprietor: **Bunge Loders Croklaan B.V.**
**1521 AZ Wormerveer (NL)**

(72) Inventors:
• **VERKUIJL, Bastiaan Jeroen Victor**
**1521 AZ Wormerveer (NL)**

• **HUPPERTZ, Paul Jan Philip**
**1521 AZ Wormerveer (NL)**

(74) Representative: **Potter Clarkson**
**Chapel Quarter**
**Mount Street**
**Nottingham NG1 6HQ (GB)**

(56) References cited:
**EP-A1- 2 727 472          EP-B1- 0 424 055**
**WO-A1-2010/066397     WO-A1-2016/154574**
**WO-A1-2018/137938     WO-A2-2004/080197**
**US-A- 5 928 687**

## Description

This invention relates to a rumen protected matrix for animal feed, the use thereof, an animal feed product comprising the matrix and a process for making the matrix.

## Background

The rumen forms the large part of the reticulorumen, which is the first chamber in the alimentary canal of ruminant animals. Proteins, starch, fiber and sugar are fermented thanks to the microbes that are present to generate volatile fatty acids and microbial protein.

Salts of organic acids are widely used in the animal feed industry as sources of acids in animal feed rations. Butyric acid is a saturated carboxylic acid containing four carbon atoms. It is well known for its antibacterial capacities and has been used as a feed additive. It can be found in the form of esters in animal fats. Free butyric acid is characterized by a very unpleasant odor; therefore, free butyric acid is transformed into a butyrate compound, either as a salt (sodium or calcium) or an ester (for example, monobutyrin) to facilitate its use in animal feed composition.

The butyrate compound needs to pass through the rumen without being absorbed and to become available at the lower part of the gastro-intestinal tract for subsequent digestion and absorption after bypassing the rumen. The protection of such butyrate compounds is to prevent absorption via the ruminal epithelium into the portal vein from which they are carried by ruminal veins to the portal vein and hence through the liver. It is common to use high melting triglyceride fats performing a protection role to encapsulate butyrate compounds. Continuous removal of volatile fatty acid from the rumen is important not only for distribution, but to prevent excessive and damaging drops in pH of rumen fluid.

EP A1 3 000 329 addresses a new synthetic method, in a single reaction or in a double reaction, of compositions for animal feeding which comprise organic acid salts selected from formic, lactic, propionic, butyric, valerianic, lauric, benzoic, caprylic or capric acid, protected with soaps rich in fatty acids present in vegetable fats.

EP A1 1 800 546 relates to a method of producing calcium, sodium or magnesium soaps from fatty acids or oleins from animal or vegetable fats and the use of said soaps as nutrients in monogastric animal feed, which is made possible owing to the incorporation of glycerol, glycerol plus an emulsifier or an emulsifier, said agent(s) being incorporated during the production process such as to simplify the process.

WO 2011/128871 describes formulations for animal feed, comprising granules comprising a mixed butyrate lactate salt; in which the mixed butyrate lactate salt is a salt of an at least bivalent metal, such as calcium, and the butyrate and lactate are present in a molar ratio between 3:1 and 1:3.

EP A1 2 666 364 relates to the combination of organic acid salts with at least one active ingredient of plant origin, preferably essential oils, partially protected with vegetable fats and/or oils, which prevent these active ingredients from being digested by stomach enzymes during the digestive process.

EP A1 0 070 868 describes a feed supplement composition of (1) 8 to 84 percent, by weight, ammonium isobutyrate and (2) 16 to 92 percent, by weight, of a component having 3 to 63 percent, by weight, ammonium valerate, 3 to 51 percent, by weight, ammonium isovalerate and 3 to 67 percent, by weight, ammonium 2-methylbutyrate.

EP B1 0 424 055 relates to the addition of trace amounts of ethyl butyrate to the diet of young animals, especially monogastric animals such as piglets and ruminants such as calves, to enhance feed intake and growth rate.

WO 2010/066397 relates to formulations for animal feed comprising coated granules comprising butyrate salt; the butyrate salt is preferably a sodium or calcium salt.

EP A1 1 354 520 concerns a product for animal feeding containing n-butyric acid and its salts and the corresponding production method.

CN 103609866A relates to a microcapsule type butyrate preparation method.

EP A1 2 727 472 relates to a method for preparing a feed additive comprising a butyrate salt comprising the steps of: a) extruding a composition comprising of said butyrate salt in a matrix of a fatty substance; and b) coating the granules formed in step a).

EP B1 2 410 871 describes antibacterial and anti-mould compositions containing high amounts of C1 to C7 organic acid monoglycerides and glycerol, their preparation and their use in animal feedstuffs.

WO 2018/137938 describes a process for the preparation of fatty acid products for use in animal feed comprising the steps of: i) providing a palm fatty acid distillate; ii) fractionating the palm fatty acid distillate to form a first fraction and a second fraction; and iii) separating the first fraction from the second fraction; wherein the first fraction comprises palmitic acid (C16:0) in an amount greater than about 60 wt.% and wherein the second fraction comprises palmitic acid (C16:0) in an amount from about 20 wt.% to about 55 wt.%, the percentages being based on the total weight of C12 to C24 fatty acids present in the respective fractions.

Gäbel G et al. (Anim Health Res Rev 3(1):15-30, 2002) describe transfer of energy substrates across the ruminal epithelium: implications and limitations.

WO 2016/154574 describes a rumen by-pass composition comprising a first rumen by-pass component and a nutritional composition, wherein the first rumen by-pass component comprises a first fatty acid composition having a melting point not less than 40°C and an Iodine Value not greater than 30.

US 5,928,687 describes a rumen by-pass feed supplement in the form of a matrix containing up to about 70 percent by weight of at least one biologically active material susceptible to inactivation in the rumen, and a protective substance which is a glyceride-free mixture of aliphatic fatty acids having an Iodine Value between 10 and 20, in an amount effective to both form a fatty acid matrix with the biologically active material and a surface coating impervious to attack in the rumen.

There remains a need to improve the performance of the protection for butyrate compounds against the absorption in the rumen. There remains also a need to provide an improved rumen protected matrix containing butyrate compounds, which can be produced via a simple and efficient process.

**Description of the invention**

According to the present invention, there is provided a rumen protected matrix for animal feed comprising from 85% to 99% by weight of at least one fatty acid component and from 1% to 15% by weight of at least one butyric acid ester component;

> wherein the matrix comprises at least 55% by weight of free carboxylic acids having from 8 to 24 carbon atoms measured according to AOCS Ca 5a-40 and calculated as percentage oleic acid; wherein the matrix has a Mettler dropping point from 40°C to 80°C measured according to AOCS Cc 18-8;
> wherein the fatty acid component is selected from palm fatty acid distillate, palm fatty acid distillate stearin, fully hydrogenated palm fatty acid distillate, fully hydrogenated palm fatty acid distillate stearin, fully hydrogenated palm fatty acid distillate olein, lauric fatty acid distillate, fully hydrogenated lauric fatty acid distillate or mixture thereof;
> wherein the fatty acid component is a component comprising at least 50% by weight of free fatty acid measured according to AOCS Ca 5a-40 and calculated as percentage oleic acid, and wherein the free fatty acid and/or fatty acyl groups in the fatty acid component have from 8 to 24 carbon atoms.

The rumen protected matrix of this invention has been found to be particularly useful as a rumen-bypass dietary ingredient for animal feed. A rumen protected matrix according to the invention can be produced particularly via a simple and efficient process using a free fatty acid fraction which is the waste product from the refining of oils and fats. Using the waste product from oils and fats processing would increase the yield and the efficiency of the whole process. The matrix of a combination of fatty acid and butyric acid ester components surprisingly provides improved performance against absorption in the rumen.

The term "rumen protected matrix" refers to a product, generally in powder form, which comprises two or more discrete components and in which one component is encapsulated partially or entirely by another component, typically to protect a nutritional compound, and which can pass through the rumen, generally substantially or completely unaltered or absorbed. The matrix will typically pass through the rumen while the nutritional compound will not be absorbed and will become available at the lower part of the gastro-intestinal tract for subsequent digestion and absorption after bypassing the rumen.

The term "animal feed" refers to food given to animals in course of animal husbandry. The health of animals is ensured by the quality of feed supply.

The term "fat" refers to glyceride fats and oils containing fatty acid acyl groups and does not imply any particular melting point. The term "oil" is used synonymously with "fat".

The term "fatty acid" refers to straight chain saturated or unsaturated (including mono- and poly unsaturated) carboxylic acids having from 8 to 24 carbon atoms. A fatty acid having x carbon atoms and y double bonds may be denoted Cx:y. For example, palmitic acid may be denoted C16:0 and oleic acid may be denoted C18:1. The fatty acid profile may be determined by fatty acid methyl ester analysis (FAME) using gas chromatography according to ISO 12966-2 and ISO 12966-4. Percentages of fatty acids in compositions (e.g. palmitic acid (C16:0), stearic acid (C18:0), lauric acid (C12:0), saturated fatty acid (SAFA) etc.) refer to herein include both acyl groups such as tri-, di- and mono-glycerides and free fatty acids and based on the total weight of C8 to C24 fatty acid residues.

The term "free fatty acid" refers to fatty acid not bound to any alcohol (such as glycerol) as part of an ester molecule. Free fatty acid content may be determined by titration with a standard alkali according to AOCS Official Method Ca 5a-40. Free fatty acid concentration is calculated and expressed as percentage oleic acid. The molar mass of oleic acid (282 g/mol) is therefore used in the expression as given in AOCS Official Method Ca 5a-40 to calculate the free fatty acid percentage. The AOCS Ca 5a-40 method the calculation below that assumes that the molar number of titrated acid groups correspond to oleic acid:

$$\%\text{FFA as oleic acid} = (\text{titrated mol base} \times 282\ g/mol)/\text{sample weight }(g) \times 100\%$$

The resulting FFA value by weight is an approximation, as in naturally occurring oils and fats, the actual free fatty acids are a mixture having different molecular weights.

The term "fatty acid component" refers to a component comprising at least 50% by weight of free fatty acid measured according to AOCS Ca 5a-40 and calculated as percentage oleic acid. Free fatty acids and/or fatty acyl groups in the fatty acid component have from 8 to 24 carbon atoms.

The term "butyric acid ester component" refers to a component comprising at least one chemical compound derived from a butyric acid and an alcohol, such as ethyl butyrate or monobutyrin.

The term "monobutyrin product" refers to a product comprising at least 25% by weight of monobutyrin.

The term "Mettler dropping point" refers to the temperature at which a sample passes from a semisolid to a liquid state under specific test conditions according to AOCS Cc 18-80.

The rumen protected matrix of this invention has a Mettler dropping point from 40°C to 80°C measured according to AOCS Cc 18-80, preferably from 40°C to 70°C and more preferably from 50°C to 65°C. The matrix with the preferred Mettler dropping point provides further improved performance of the protection for butyrate compounds preventing absorption via the ruminal epithelium into the portal vein from which they are carried by ruminal veins to the portal vein and through the liver. This temperature range also provides an even better processability, in particular for making the matrix into particles using techniques such as spray congealing.

The matrix according to the invention comprises at least 55% by weight of free fatty acids having from 8 to 24 carbon atoms measured according to AOCS Ca 5a-40 and calculated as percentage oleic acid, preferably from 60% to 100% by weight, more preferably from 70% to 97% by weight and even more preferably from 80% to 96% by weight.

The matrix according to the invention comprises from 85% to 99% by weight of at least one fatty acid component and from 1% to 15% by weight of at least one butyric acid ester component. A preferred matrix comprises from 88% to 97% by weight of at least one fatty acid component and from 3% to 12% by weight of butyric acid ester component. A most preferred matrix comprises from 90% to 96% by weight of at least one fatty acid component and from 4% to 10% by weight of butyric acid ester component.

In a preferred embodiment, a rumen protected matrix for animal feed according to the invention comprises: from 85% to 99% by weight of at least one fatty acid component and from 1% to 15% by weight of at least one butyric acid ester component; wherein the matrix has a Mettler dropping point from 40°C to 80°C and comprises from 60% to 100% by weight of free fatty acids having from 8 to 24 carbon atoms measured according to AOCS Ca 5a-40 and calculated as percentage oleic acid.

In a more preferred embodiment, a rumen protected matrix for animal feed according to the invention comprises: from 88% to 97% by weight of at least one fatty acid component and from 3% to 12% by weight of at least one butyric acid ester component; wherein the matrix has a Mettler dropping point from 40°C to 70°C and comprises at least 70% by weight of free fatty acids having from 8 to 24 carbon atoms measured according to AOCS Ca 5a-40 and calculated as percentage oleic acid.

In an even more preferred embodiment, a rumen protected matrix for animal feed according to the invention comprises: from 90% to 96% by weight of at least one fatty acid component and from 4% to 10% by weight of at least one butyric acid ester component; wherein the matrix has a Mettler dropping point from 50°C to 60°C and comprises at least 80% by weight of free fatty acids having from 8 to 24 carbon atoms measured according to AOCS Ca 5a-40 and calculated as percentage oleic acid.

Particle size distribution may be determined by sieve analysis. Preferably, from 85% to 100% by weight of the particles of the matrix of the invention have a size from 500 to 1000μm. More preferably, from 90% to 99% by weight of the particles of the matrix have a size from 500 to 1000μm. Even more preferably, from 95% to 98% by weight of the particles of the matrix have a size from 500 to 1000μm. The matrix having the preferred particle size provides further an even better processabiltiy in order to blend the rumen protected matrix easily, efficiently and homogenously with other ingredients in an animal feed product. However, other size ranges are possible such as 350 to 850μm

The rumen protected matrix for animal feed of the invention comprises from 1% to 15% by weight of at least one butyric acid ester component. The butyric acid ester component is preferably an alkyl butyrate, a butyrate glyceride, or a mixture thereof. The term "alkyl", as used herein, includes straight chain or branched saturated hydrocarbons having from 1 to 12, more preferably 1 to 6, carbon atoms. The butyric acid ester component is further preferably selected from ethyl butyrate, propyl butyrate, butyl butyrate, pentyl butyrate, hexyl butyrate, monobutyrin, dibutyrin and tributyrin, or mixtures thereof.

The butyric acid ester component of the matrix according to the invention is preferably a monobutyrin product. The monobutyrin product comprises preferably from 35% to 100% by weight of monobutyrin, more preferably from 40% to 90% by weight and even more preferably from 45% to 80%.

The rumen protected matrix according to the invention comprises preferably from 1% to 10% by weight of monobutyrin, and more preferably from 1.5% to 5% by weight.

The fatty acid component of the matrix of the invention comprises preferably from 60% to 100% by weight of free fatty acid measured according to AOCS Ca 5a-40 and calculated as percentage oleic acid, more preferably from 70% to 98% by weight and even more preferably from 80% to 97% by weight.

The fatty acid component of the matrix of the invention comprises preferably from 65% to 100% by weight of saturated fatty acids (SAFA) based on total fatty acyl groups or fatty acids, more preferably from 70% to 99% by weight and even more preferably from 73% to 98% by weight.

The fatty acid component of the matrix of the invention comprises preferably from 10% to 100% by weight of palmitic acid (C16:0) based on total fatty acyl groups or fatty acids, more preferably from 15% to 69% by weight and even more preferably from 20% to 50% by weight.

The fatty acid component of the matrix of the invention comprises preferably from 1 % to 100% by weight of stearic acid (C18:0) based on total fatty acyl groups or fatty acids, more preferably from 2% to 97% by weight and even more preferably from 30% to 60% by weight.

The fatty acid component of the matrix of the invention comprises preferably from 1% to 60% by weight of lauric acid (C12:0) based on total fatty acyl groups or fatty acids, more preferably from 2% to 55% by weight and even more preferably from 3% to 50% by weight. The preferred range of lauric acid (C12:0) may not only provide an even better protection performance in the rumen but also provide an even better antibacterial effect to enhance animal growth and feed efficiency.

Accordingly, in a preferred embodiment, the fatty acid component of the matrix of the invention comprises: from 10% to 98% by weight of palmitic acid (C16:0); from 1% to 89% by weight of stearic acid (C18:0); and from 1% to 60% by weight of lauric acid (C12:0). The total of all percentages, including of fatty acids not specified, will add up to 100%.

In a more preferable embodiment, the fatty acid component of the matrix of the invention comprises: from 15% to 97% by weight of palmitic acid (C16:0); from 2% to 97% by weight of stearic acid (C18:0); and from 1% to 55% by weight of lauric acid (C12:0). The total of all percentages, including of fatty acids not specified, will add up to 100%.

In an even more preferable embodiment, the fatty acid component of the matrix of the invention comprises: from 20% to 95% by weight of palmitic acid (C16:0); from 3% to 95% by weight of stearic acid (C18:0); and from 3% to 50% by weight of lauric acid (C12:0). The total of all percentages, including of fatty acids not specified, will add up to 100%.

Typically, vegetable oils such as palm oil or lauric fats (such as palm kernel oil or coconut oil) are processed during the refining in a stripper to remove the majority of the free fatty acids as a distillate. Stripping (or deodorization) normally takes place in the presence of water steam or an inert gas (such as nitrogen) at reduced pressure and at elevated temperature. The reduced pressure of the stripping is preferably below 20mbar, more preferably below 10mbar and even more preferably below 5mbar. The elevated temperature of the stripping is preferably from 170°C to 270°C, more preferably from 180°C to 260°C and even more preferably from 190°C to 250°C. The free fatty acids are collected as the volatile fraction after stripping. This fraction is known as fatty acid distillate (FAD). The fatty acid distillate from palm oil is known as palm fatty acid distillate (PFAD) and the fatty acid distillate from lauric fats is known as lauric fatty acid distillate (LFAD). Palm fatty acid distillate (PFAD) comprises preferably from 25% to 95% by weight of palmitic acid (C16:0) and more preferably from 30% to 90% by weight. Lauric fatty acid distillate (LFAD) comprises preferably from 30% to 90% by weight of lauric acid (C12:0) and more preferably from 35% to 85% by weight of lauric acid (C12:0).

Fatty acid distillate (such as PFAD) may be fractioned to produce a hard fraction (stearin) and a soft fraction (olein). Fractionation can be performed either with added solvent (such as acetone, ethanol or hexane) or without added solvent. Fractionation with added solvent is commonly called wet fractionation or solvent fraction. Fractionation without added solvent is commonly called dry fractionation. Fractionation of fatty acid distillate is preferably dry fractionation.

Palm fatty acid distillate (PFAD) stearin and palm fatty acid distillate (PFAD) olein may be obtained by a method comprising:

a) providing a palm fatty acid distillate (PFAD)
b) dry fractionating the palm fatty acid distillate (PFAD) to form a hard fraction (stearin) and a soft fraction (olein); and
c) separating the hard fraction (stearin) from the soft fraction (olein).

The dry fractionation of palm fatty acid distillate (PFAD) is preferably performed at from 30°C to 50°C, more preferably at from 35° to 48°C and even more preferably at from 40°C to 45°C. WO 2018/137939 provides further the teaching regarding palm fatty acid distillation fractionation.

Palm fatty acid distillate (PFAD), the fractions of palm fatty acid distillate (palm fatty acid distillate (PFAD) stearin or palm fatty acid distillate (PFAD) olein) or a mixture thereof may be hydrogenated. The term "hydrogenation" refers to the reaction of hydrogen with an organic compound (such as fat or fatty acid) to convert unsaturated fatty acyl groups and/or unsaturated fatty acid to saturated fatty acyl groups and/or saturated fatty acids. The hydrogenation is preferably full hydrogenation. The term "full hydrogenation" refers to the reaction of hydrogen with an organic compound (such as fat or fatty acid) to completely or almost completely convert unsaturated fatty acyl groups and/or unsaturated fatty acid to saturated fatty acyl groups or saturated fatty acids, where the final composition after full hydrogenation comprises at least 95% by weight of saturated fatty acyl groups and/or saturated fatty acids based on total fatty acyl groups or fatty acids, respectively..

The hydrogenation may be catalyzed by a catalyst, preferably by nickel, palladium or platinum. The fully hydrogenation of fatty acid distillate (FAD) is preferably catalyzed by a nickel catalyst, for example, Pricat™ 9932 of Johnson Matthey (United Kingdom). Pricat™ 9932 is an active nickel, silica supported catalyst. The amount of catalyst for the hydrogenation is preferably at least 0.1% by weight of the organic compound (such as fat or fatty acid composition) subjected to hydrogenation, more preferably at least 0.25% by weight and even more preferably at least 0.4% by weight. The reaction temperature of the hydrogenation is preferably between 120°C and 220°C and more preferably between 130°C and 210°C. The hydrogenation is performed preferably at a pressure of between 1 and 6 bar. The amount of hydrogen necessary to completely or almost completely convert unsaturated fatty acyl groups and/or unsaturated fatty acid to saturated fatty acyl groups or saturated fatty acyl for a fully hydrogenation depends on the amount of unsaturated fatty acyl groups and/or unsaturated fatty acid in the composition prior to the reaction, as well known by the skilled person in the art. The composition after hydrogenation may be subjected to any further processing such as filtration, bleaching, deodorization or any combination thereof.

The fatty acid component of the matrix of the invention is selected from palm fatty acid distillate, palm fatty acid distillate stearin, fully hydrogenated palm fatty acid distillate, fully hydrogenated palm fatty acid distillate stearin, fully hydrogenated palm fatty acid distillate olein, lauric fatty acid distillate, fully hydrogenated lauric fatty acid distillate or mixture thereof. A preferable fatty acid component of the matrix of the invention is the mixture of fully hydrogenated palm fatty acid distillate olein and lauric fatty acid distillate. A more preferable fatty acid component of the matrix of the invention comprises from 60% to 90% by weight of fully hydrogenated palm fatty acid distillate olein and from 10% to 40% by weight of lauric fatty acid distillate. A most preferred fatty acid component of the matrix of the invention comprises from 70% to 85% by weight of fully hydrogenated palm fatty acid distillate olein and from 15% to 30% by weight of lauric fatty acid distillate.

In a preferred embodiment, the rumen protected matrix comprises: from 1% to 15% by weight of monobutyrin product; from 55% to 95% by weight of fully hydrogenated palm fatty acid distillate olein; and from 1% to 30% by weight of lauric fatty acid distillate.

In a more preferred embodiment, the rumen protected matrix comprises: from 3% to 12% by weight of monobutyrin product; from 65% to 85% by weight of fully hydrogenated palm fatty acid distillate olein; and from 10% to 25% by weight of lauric fatty acid distillate.

In an even more preferred embodiment, the rumen protected matrix comprises: from 5% to 10% by weight of monobutyrin product; from 70% to 80% by weight of fully hydrogenated palm fatty acid distillate olein; and from 15% to 20% by weight of lauric fatty acid distillate.

The invention also relates to the use of a rumen protected matrix according to the invention in an animal feed product. The matrix of the invention is used as a rumen protected nutritional ingredient.

The invention also contemplates an animal feed product comprising the matrix according to the invention. Preferably, the animal feed product comprises optionally further one or more ingredients selected from proteins, amino acids, vitamins, fats, carbohydrates, minerals, fibers, non-protein nitrogen compounds, medicaments and mixtures thereof.

Also provided by the invention is the use of an animal feed product comprising the rumen protected matrix according to the invention, wherein the matrix is suitable to be used as a rumen protected nutritional ingredient.

The invention also relates to a process for making the matrix according to the invention comprising the steps of:

a) providing at least one fatty acid component;
b) providing at least one butyric acid ester component;
c) blending the components provided in step a) and b);
d) powdering the matrix from the blend prepared in step c).

In step d) the powdering may be performed via known processes, such as pelletizing, beading or spray congealing.

In a preferable embodiment, in step d) the powdering is performed by means of spray congealing. Spray congealing (also named as spray cooling) is a method of producing encapsulated microparticles without the use of additional solvent. The technology of spray congealing is widely applied by food, feed or pharmaceutical industries. The rumen protected matrix is preferably prepared by spray congealing. The matrix composition including the components described in the patent is surprisingly easy and simple to be efficiently processed by spray congealing.

In another preferable embodiment, the blend prepared in step c) comprises: from 1% to 15% by weight of monobutyrin product; from 55% to 95% by weight of fully hydrogenated palm fatty acid distillate olein; and from 0% to 30% by weight of lauric fatty acid distillate.

6

In a more preferable embodiment, the blend prepared in step c) comprises: from 3% to 12% by weight of monobutyrin product; from 65% to 85% by weight of fully hydrogenated palm fatty acid distillate olein; and from 10% to 25% by weight of lauric fatty acid distillate.

In an even more preferable embodiment, the blend prepared in step c) comprises: from 5% to 10% by weight of monobutyrin product; from 70% to 80% by weight of fully hydrogenated palm fatty acid distillate olein; and from 15% to 20% by weight of lauric fatty acid distillate.

The listing or discussion of an apparently prior-published document in this specification should not necessarily be taken as an acknowledgement that the document is part of the state of the art or is common general knowledge.

The following non-limiting examples illustrate the invention and do not limit its scope in any way. In the examples and throughout this specification, all percentages, parts and ratios are by weight unless indicated otherwise.

EXAM PLES

Throughout these examples:

Free fatty acid percentages are measured according to AOCS Ca 5a-40 and calculated as percentage oleic acid;
Mettler dropping point (MDP) is measured according to AOCS Cc 18-80;
Cx:y refers to a fatty acid having x carbon atoms from 8 to 24 and y double bonds; percentages determined by GC-FAME (ISO 12966-2 and ISO 12966-4) of total saturated or unsaturated, straight chain carboxylic acids having from 8 to 24 carbon atoms;
SAFA refers to saturated fatty acids; and
MUFA refers to monounsaturated fatty acids.

Example 1

Matrix components

- Fully hydrogenated palm fatty acid distillate olein (Component A) - fatty acid component

A palm fatty acid distillate (PFAD) starting material was obtained from palm oil refining. The PFAD starting material was dry fractionated at 40°C-45°C to separate a stearin fraction (a hard fraction - PFAD stearin) from a olein fraction (a soft fraction - PFAD olein). This PFAD olein was further fully hydrogenated to obtain fully hydrogenated palm fatty acid distillate olein (Component A). Analytical data of Component A is shown in Table 1.

Table 1: Analytical data of fully hydrogenated palm fatty acid distillate olein (Component A)

|  | Component A |
| --- | --- |
| Free fatty acids% | 95 |
| Mettler Dropping point (MDP) (°C) | 61 |
| C8:0 | 0.1 |
| C10:0 | 0.1 |
| C12:0 | 0.5 |
| C14:0 | 1.3 |
| C16:0 | 33.8 |
| C18:0 | 60.9 |
| C18:1 | 2.5 |
| C18:2 | 0.1 |
| SAFA | 97.4 |
| MUFA | 2.5 |

- Lauric fatty acid distillate (Component B) - fatty acid component

A lauric fatty acid distillate (LFAD) was obtained from lauric fats (such as palm kernel oil, coconut oil) refining. Analytical data of lauric fatty acid distillate (Component B) is shown in Table 2.

Table 2: Analytical data of lauric fatty acid distillate (Component B)

|  | Component B |
|---|---|
| Free fatty acids% | 87 |
| C8:0 | 2.6 |
| C10:0 | 2.9 |
| C12:0 | 36.6 |
| C14:0 | 14.1 |
| C16:0 | 20.0 |
| C18:0 | 3.0 |
| C18:1 | 16.6 |
| C18:2 | 3.6 |
| SAFA | 79.2 |
| MUFA | 16.6 |

- Monobutyrin product (Component C) - butyric acid ester component

Monobutyrin product (Component C) was obtained from FF Chemicals B.V. in the Netherlands. This product comprises, by weight, 45% monobutyrin, 15% dibutyrin and 38% glycerol according to the specifications provided by the supplier.

- Sodium butyrate (Component D)

Sodium butyrate product (Component D) was obtained from Hangzhou Vega Co., Ltd in P.R. China. This product comprises 98% by weight sodium butyrate according to the specifications provided by the supplier.

- Revel® C (Component E)

Revel® C is a commercial fat product, which is fully hydrogenated palm oil. Analytical data of Revel® C is shown in Table 3.

Table 3: Analytical data of Revel® C (Component E)

|  | Component E |
|---|---|
| Free fatty acids% | 0.01 |
| Mettler Dropping point (MDP) (°C) | 61 |
| C8:0 | 0.0 |
| C10:0 | 0.0 |
| C12:0 | 0.4 |
| C14:0 | 1.4 |
| C16:0 | 58.8 |
| C18:0 | 37.7 |
| C18:1 | 0.7 |
| C18:2 | 0.2 |

(continued)

|  | Component E |
| --- | --- |
| SAFA | 99.1 |
| MUFA | 0.7 |

Example 2

Matrix composition

The matrix composition is illustrated in Table 4.

Table 4: Matrix composition

| Matrix | Composition |
| --- | --- |
| Matrix 1 according to the invention | 75%(w/w) Component A/20%(w/w) Component B/5%(w/w) Component C |
| Comparative Matrix 1 | 75%(w/w) Component A/20%(w/w) Component B/5%(w/w) Component D |
| Reference Matrix | 95%(w/w) Component E/5%(w/w) Component C |

Analytical data of Matrix 1 according to the invention is shown in Table 5.

Table 5: Analytical data of Matrix 1 according to the invention

|  | Matrix 1 according to the invention |
| --- | --- |
| Free fatty acids% | 85 |
| Mettler Dropping point (MDP) (°C) | 55 |
| Monobutyrin% (wt.) | 2.25% |

Monobutyrin% (wt.) is calculated based on the weight percentage of Component C and the weight percentage of monobutyrin in Component C.

The fatty acid composition was analyzed in Matrix 1 and Comparative Matrix 1 without Component C or Component D respectively. The results are shown in Table 6.

Table 6: Fatty acid composition of Matrix 1 and Comparative Matrix 1 without Component C or Component D respectively

| C8:0 | 0.6 |
| --- | --- |
| C10:0 | 0.7 |
| C12:0 | 8.1 |
| C14:0 | 4.0 |
| C16:0 | 30.7 |
| C18:0 | 47.3 |
| C18:1 | 6.3 |
| C18:2 | 1.0 |
| SAFA | 92.2 |
| MUFA | 6.3 |

During the blending, Component C blends easily with fatty acid components (Component A and Component B) to obtain a homogenous matrix composition ready for powdering. However, Component D blends difficultly with fatty acid components (Component A and Component B).

Extensive heating and stirring for a long period is required for the blending of Comparative Matrix 1. Therefore, Matrix 1 according to the invention is prepared more easily and efficiently comparing to Comparative Matrix 1.

Example 3

Powder production

Powders were made using a spray congealing tower (ProCepT N.V. in Belgium) with prilling nozzle and counter-current flow in the a test lab (Xedev BVBA in Belgium). The products were heated to 75°C and by overpressure pushed through the prilling nozzle. The powders are collected at the bottom of the device and resulted in a particle size of 95 % by weight of particles between 500 -1000 $\mu$m by sieve analysis.

During the powdering, the spray congealing tower with prilling nozzle have to be cleaned frequently due to congealing in the nozzle with Comparative Matrix 1. The frequent cleaning is surprisingly not needed during the powdering of Matrix 1 according to the invention. The powdering process is running significantly smoothly and efficiently with Matrix 1 according to the invention.

Example 4

Cow rumen simulation test for Matrix 1, Comparative Matrix 1 and Reference Matrix

The test *in vitro* is based on the testing *in vivo* at Schothorst Feed Research (in the Netherlands) by putting the product in a filter bag and then for certain time in the cow rumen. The pH value of the rumen is around pH 6.4 for healthy animals.

Four samples of Matrix 1 according to the invention and four samples of Comparative Matrix 1 were placed in eight filters suitable to hold each single product. Filters with products are put into eight separate containers and 100 ml buffer solution of pH 6.4 was added to each container. The containers were then placed on to a mechanical heated shaker at 40°C. At 120, 240, 480 & 960 minutes samples from both materials were removed from the heated shaker. Filters were taken out of the container and placed in an exsiccator to dry for two days. The products were removed from filter for measuring butyric acid content.

One sample of Reference Matrix was placed in one filter suitable to hold each single product. Filters with products are put into one container and 100ml buffer solution of pH 6.4 was added to the container. The container was then placed on to a mechanical heated shaker at 40°C. At 960 minutes sample was removed from the heated shaker. The filter was taken out of the container and placed in an exsiccator to dry for two days. The product was removed from filter for measuring butyric acid content.

After extraction and purification, the samples were analyzed by ion exchange chromatography in combination with conductivity detector at a laboratory (NutriControl B.V. in the Netherlands). The results are shown in Table 7.

Table 7: Results of butyric acid concentration present before and after dissolving over time

| Time (min) | Butyric acid concentration (g/kg) | | |
|---|---|---|---|
| | Matrix 1 | Comparative Matrix 1 | Reference Matrix |
| 0 | 22 | 33 | 21 |
| 120 | 7 | <1 | * |
| 240 | 5 | <1 | * |
| 480 | 5 | <1 | * |
| 960 | 4 | <1 | 4 |
| * No sample prepared or taken | | | |

The results show that in Comparative Matrix 1 butyric acid is no longer present after 120 minutes, which means under cow rumen conditions the nutritional source of butyric acid is no longer protected in Comparative Matrix 1. On the contrary, butyric acid is still present even after 960 minutes in Matrix 1 according to the invention and Reference Matrix. Surprisingly, the comparable protection effect in the rumen can still be achieved replacing the standard fat by a low value byproduct instead of high value completely processed fat products from oils and fats processing. It can be concluded that the protection effect in the rumen provided by Matrix 1 is clearly much better than by Comparative Matrix 1.

**Claims**

1.  A rumen protected matrix for animal feed comprising:

    - from 85% to 99% by weight of at least one fatty acid component; and
    - from 1 % to 15% by weight of at least one butyric acid ester component;
    wherein the matrix comprises at least 55% by weight of free fatty acid having from 8 to 24 carbon atoms measured according to AOCS Ca 5a-40 and calculated as percentage oleic acid,
    wherein the matrix has a Mettler dropping point from 40°C to 80°C measured according to AOCS Cc 18-80,
    wherein the fatty acid component is selected from palm fatty acid distillate, palm fatty acid distillate stearin, fully hydrogenated palm fatty acid distillate, fully hydrogenated palm fatty acid distillate stearin, fully hydrogenated palm fatty acid distillate olein, lauric fatty acid distillate, fully hydrogenated lauric fatty acid distillate or mixture thereof,
    wherein the fatty acid component is a component comprising at least 50% by weight of free fatty acid measured according to AOCS Ca 5a-40 and calculated as percentage oleic acid, and wherein the free fatty acid and/or fatty acyl groups in the fatty acid component have from 8 to 24 carbon atoms.

2.  Matrix according to claim 1, wherein the matrix has a Mettler dropping point from 40°C to 70°C, and preferably from 50°C to 65°C.

3.  Matrix according to claim 1 or 2, wherein the matrix comprises from 60% to 99% by weight of free fatty acid having from 8 to 24 carbon atoms, preferably from 70% to 97% by weight and more preferably from 80% to 96% by weight.

4.  Matrix according to any of the preceding claims, wherein the matrix is in the form of particles, wherein from 85% to 100% by weight of the particles of the matrix have a size from 500 to 1000μm, preferably from 90% to 99% by weight of the particles of the matrix have a size from 500 to 1000μm, and more preferably from 95% to 98% by weight of the particles of the matrix have a size from 500 to 1000μm.

5.  Matrix according to any of the preceding claims, wherein the matrix comprises:

    - from 88% to 97% by weight of at least one fatty acid component, preferably from 90% to 96% by weight; and
    - from 3% to 12% by weight of at least one butyric acid ester component, preferably from 4% to 10% by weight.

6.  Matrix according to any of the preceding claims, wherein the butyric acid ester component is selected from ethyl butyrate, propyl butyrate, butyl butyrate, pentyl butyrate, hexyl butyrate, monobutyrin, dibutyrin and tributyrin, or mixtures thereof.

7.  Matrix according to any of the preceding claims, wherein the matrix comprises from 0.1% to 20% by weight of monobutyrin, preferably from 1% to 10% by weight and more preferably from 1.5% to 5% by weight.

8.  Matrix according to any of the preceding claims, wherein the fatty acid component comprises from 60% to 100% by weight of free fatty acid having from 8 to 24 carbon atoms, preferably from 70% to 97% by weight and more preferably from 80% to 96% by weight.

9.  Matrix according to any of the preceding claims, wherein the fatty acid component comprises from 65% to 100% by weight of saturated fatty acids (SAFA) based on total fatty acyl groups or fatty acids, preferably from 70% to 99% by weight and more preferably from 73% to 98% by weight.

10. Matrix according to any of the preceding claims, wherein the fatty acid component is a mixture of fully hydrogenated palm fatty acid distillate olein and lauric fatty acid distillate.

11. Matrix according to any of the preceding claims, wherein the matrix comprises:

    - from 1% to 15% by weight of a monobutyrin product, preferably from 3% to 12% by weight, more preferably from 5% to 10% by weight;
    - from 55% to 95% by weight of fully hydrogenated palm fatty acid distillate olein, preferably from 65% to 85% by weight, more preferably from 70% to 80% by weight; and
    - from 0% to 30% by weight of lauric fatty acid distillate, preferably from 10% to 25% by weight, more preferably from 15% to 20% by weight.

12. Use of the matrix of any one of the preceding claims in an animal feed product as a rumen protected nutritional ingredient.

13. An animal feed product comprising the matrix of any of claims 1 to 11, wherein the product comprises optionally further one or more ingredients selected from proteins, amino acids, vitamins, fats, carbohydrates, minerals, fibers, non-protein nitrogen compounds, medicaments and mixtures thereof.

14. Process for making the matrix of any one of claims 1 to 11, comprising the steps of:

a) providing at least one fatty acid component;
b) providing at least one butyric acid ester component;
c) blending the components provided in step a) and b);
d) powdering the matrix from the blend prepared in step c), preferably by means of spray congealing.

15. Process according to claim 14, wherein the blend prepared in step c) comprises:

- from 1% to 15% by weight of monobutyrin product, preferably from 3% to 12% by weight, more preferably from 5% to 10% by weight;
- from 55% to 95% by weight of fully hydrogenated palm fatty acid distillate olein, preferably from 65% to 85% by weight, more preferably from 70% to 80% by weight; and
- from 0% to 30% by weight of lauric fatty acid distillate, preferably from 10% to 25% by weight, more preferably from 15% to 20% by weight.

## Patentansprüche

1. Pansengeschützte Matrix für Tierfutter, umfassend:

- 85 bis 99 Gew.-% mindestens einer Fettsäurekomponente; und
- 1 bis 15 Gew.-% mindestens einer Buttersäureesterkomponente;
wobei die Matrix gemessen gemäß AOCS Ca 5a-40 und berechnet als Prozentsatz Ölsäure mindestens 55 Gew.-% freie Fettsäure mit 8 bis 24 Kohlenstoffatomen umfasst, wobei die Matrix gemessen gemäß AOCS Cc 18-80 einen Mettler-Tropfpunkt von 40°C bis 80°C aufweist,
wobei die Fettsäurekomponente ausgewählt ist aus Palmfettsäuredestillat, Palmfettsäuredestillat, Stearin, vollständig hydriertem Palmfettsäuredestillat, vollständig hydriertem Palmfettsäuredestillat Stearin, vollständig hydriertem Palmfettsäuredestillat Olein, Laurinfettsäuredestillat, vollständig hydriertem Laurinfettsäuredestillat oder Mischungen davon,
wobei die Fettsäurekomponente eine Komponente ist, die gemessen gemäß AOCS Ca 5a-40 und berechnet als Prozentsatz Ölsäure mindestens 50 Gew.-% freie Fettsäure umfasst, und wobei die freien Fettsäure- und/oder Fettacylgruppen in der Fettsäurekomponente 8 bis 24 Kohlenstoffatome aufweisen.

2. Matrix nach Anspruch 1, wobei die Matrix einen Mettler-Tropfpunkt von 40°C bis 70°C und vorzugsweise von 50°C bis 65°C aufweist.

3. Matrix nach Anspruch 1 oder 2, wobei die Matrix 60 bis 99 Gew.-%, vorzugsweise 70 bis 97 Gew.-% und besonders bevorzugt 80 bis 96 Gew.-% freie Fettsäure mit 8 bis 24 Kohlenstoffatomen umfasst.

4. Matrix nach einem der vorhergehenden Ansprüche, wobei die Matrix in Form von Partikeln vorliegt, wobei 85 bis 100 Gew.-% der Partikel der Matrix eine Größe von 500 bis 1000 $\mu$m aufweisen, vorzugsweise 90 bis 99 Gew.-% der Partikel der Matrix eine Größe von 500 bis 1000 $\mu$m aufweisen, und besonders bevorzugt 95 bis 98 Gew.-% der Partikel der Matrix eine Größe von 500 bis 1000 $\mu$m aufweisen.

5. Matrix nach einem der vorhergehenden Ansprüche, wobei die Matrix Folgendes umfasst:

- 88 bis 97 Gew.-% mindestens einer Fettsäurekomponente, vorzugsweise 90 bis 96 Gew.-%; und
- 3 bis 12 Gew.-% mindestens einer Buttersäureesterkomponente, vorzugsweise 4 bis 10 Gew.-%.

**6.** Matrix nach einem der vorhergehenden Ansprüche, wobei die Buttersäureesterkomponente ausgewählt ist aus Ethylbutyrat, Propylbutyrat, Butylbutyrat, Pentylbutyrat, Hexylbutyrat, Monobutyrin, Dibutyrin und Tributyrin oder Mischungen davon.

**7.** Matrix nach einem der vorhergehenden Ansprüche, wobei die Matrix 0,1 bis 20 Gew.-%, vorzugsweise 1 bis 10 Gew.-% und besonders bevorzugt 1,5 bis 5 Gew.-% Monobutyrin umfasst.

**8.** Matrix nach einem der vorhergehenden Ansprüche, wobei die Fettsäurekomponente 60 bis 100 Gew.-%, vorzugsweise 70 bis 97 Gew.-% und besonders bevorzugt 80 bis 96 Gew.-% freie Fettsäure mit 8 bis 24 Kohlenstoffatomen umfasst.

**9.** Matrix nach einem der vorhergehenden Ansprüche, wobei die Fettsäurekomponente 65 bis 100 Gew.-%, vorzugsweise 70 bis 99 Gew.-% und besonders bevorzugt 73 bis 98 Gew.-% gesättigte Fettsäuren (SAFA) basierend auf den gesamten Fettacylgruppen oder Fettsäuren umfasst.

**10.** Matrix nach einem der vorhergehenden Ansprüche, wobei die Fettsäurekomponente eine Mischung aus vollständig hydriertem Palmfettsäuredestillat-Olein und Laurinfettsäuredestillat ist.

**11.** Matrix nach einem der vorhergehenden Ansprüche, wobei die Matrix Folgendes umfasst:

- 1 bis 15 Gew.-%, vorzugsweise 3 bis 12 Gew.-%, besonders bevorzugt 5 bis 10 Gew.-% eines Monobutyrinprodukts;
- 55 bis 95 Gew.-%, vorzugsweise 65 bis 85 Gew.-%, besonders bevorzugt 70 bis 80 Gew.-% vollständig hydriertes Palmfettsäuredestillat-Olein; und
- 0 bis 30 Gew.-%, vorzugsweise 10 bis 25 Gew.-%, besonders bevorzugt 15 bis 20 Gew.-% Laurinfettsäuredestillat.

**12.** Verwendung der Matrix nach einem der vorhergehenden Ansprüche in einem Tierfutterprodukt als pansengeschützter Nahrungsbestandteil.

**13.** Tierfutterprodukt, umfassend die Matrix nach einem der Ansprüche 1 bis 11, wobei das Produkt optional weiterhin einen oder mehrere Bestandteile umfasst, ausgewählt aus Proteinen, Aminosäuren, Vitaminen, Fetten, Kohlenhydraten, Mineralien, Ballaststoffen, Nicht-Protein-Stickstoffverbindungen, Medikamenten und Mischungen davon.

**14.** Verfahren zur Herstellung der Matrix nach einem der Ansprüche 1 bis 11, umfassend die folgenden Schritte:

a) Bereitstellen mindestens einer Fettsäurekomponente;
b) Bereitstellen mindestens einer ButtersäureesterKomponente;
c) Mischen der in Schritt a) und b) bereitgestellten Komponenten;
d) Pulverisieren der Matrix aus der in Schritt c) hergestellten Mischung, vorzugsweise mittels Sprüherstarrung.

**15.** Verfahren nach Anspruch 14, wobei die in Schritt c) hergestellte Mischung Folgendes umfasst:

- 1 bis 15 Gew.-%, vorzugsweise 3 bis 12 Gew.-%, besonders bevorzugt 5 bis 10 Gew.-% Monobutyrinprodukt;
- 55 bis 95 Gew.-%, vorzugsweise 65 bis 85 Gew.-%, besonders bevorzugt 70 bis 80 Gew.-% vollständig hydriertes Palmfettsäuredestillat-Olein; und
- 0 bis 30 Gew.-%, vorzugsweise 10 bis 25 Gew.-%, besonders bevorzugt 15 bis 20 Gew.-% Laurinfettsäuredestillat.

**Revendications**

**1.** Matrice protégée dans le rumen pour aliments pour animaux comprenant :

- de 85 % à 99 % en poids d'au moins un composant d'acide gras ; et
- de 1 % à 15 % en poids d'au moins un composant d'ester d'acide butyrique ;
dans laquelle la matrice comprend au moins 55 % en poids d'acide gras libre ayant de 8 à 24 atomes de carbone mesuré selon AOCS Ca 5a-40 et calculé en pourcentage d'acide oléique,

dans laquelle la matrice a un point de goutte Mettler de 40 °C à 80 °C mesuré selon AOCS Cc 18-80, dans laquelle le composant d'acide gras est choisi parmi le distillat d'acide gras de palme, la stéarine de distillat d'acide gras de palme, le distillat d'acide gras de palme entièrement hydrogéné, la stéarine de distillat d'acide gras de palme entièrement hydrogéné, l'oléine de distillat d'acide gras de palme entièrement hydrogéné, le distillat d'acide gras laurique, le distillat d'acide gras laurique entièrement hydrogéné ou un mélange de ceux-ci, dans laquelle le composant d'acide gras est un composant comprenant au moins 50 % en poids d'acide gras libre mesuré selon AOCS Ca 5a-40 et calculé en pourcentage d'acide oléique, et dans laquelle les groupes d'acide gras libre et/ou acyle gras dans le composant d'acide gras ont de 8 à 24 atomes de carbone.

2. Matrice selon la revendication 1, dans laquelle la matrice a un point de goutte Mettler de 40 °C à 70 °C, et de préférence de 50 °C à 65 °C.

3. Matrice selon la revendication 1 ou 2, dans laquelle la matrice comprend de 60 % à 99 % en poids d'acide gras libre ayant de 8 à 24 atomes de carbone, de préférence de 70 % à 97 % en poids et plus préférablement de 80 % à 96 % en poids.

4. Matrice selon l'une quelconque des revendications précédentes, dans laquelle la matrice est sous forme de particules, dans laquelle de 85 % à 100 % en poids des particules de la matrice ont une taille de 500 à 1 000 um, de préférence de 90 % à 99 % en poids des particules de la matrice ont une taille de 500 à 1 000 um, et plus préférablement de 95 % à 98 % en poids des particules de la matrice ont une taille de 500 à 1 000 um.

5. Matrice selon l'une des revendications précédentes, dans laquelle la matrice comprend :

   - de 88 % à 97 % en poids d'au moins un composant d'acide gras, de préférence de 90 % à 96 % en poids ; et
   - de 3 % à 12 % en poids d'au moins un composant d'ester d'acide butyrique, de préférence de 4 % à 10 % en poids.

6. Matrice selon l'une quelconque des revendications précédentes, dans laquelle le composant d'ester d'acide butyrique est choisi parmi le butyrate d'éthyle, le butyrate de propyle, le butyrate de butyle, le butyrate de pentyle, le butyrate d'hexyle, la monobutyrine, la dibutyrine et la tributyrine, ou des mélanges de ceux-ci .

7. Matrice selon l'une quelconque des revendications précédentes, dans laquelle la matrice comprend de 0,1 % à 20 % en poids de monobutyrine, de préférence de 1 % à 10 % en poids et plus préférablement de 1,5 % à 5 % en poids.

8. Matrice selon l'une quelconque des revendications précédentes, dans laquelle le composant d'acide gras comprend de 60 % à 100 % en poids d'acide gras libre ayant de 8 à 24 atomes de carbone, de préférence de 70 % à 97 % en poids et plus préférablement de 80 % à 96 % en poids.

9. Matrice selon l'une quelconque des revendications précédentes, dans laquelle le composant d'acide gras comprend de 65 % à 100 % en poids d'acides gras saturés (SAFA), sur la base du total de groupes d'acyle gras ou d'acides gras, de préférence de 70 % à 99 % en poids et plus préférablement de 73 % à 98 % en poids.

10. Matrice selon l'une quelconque des revendications précédentes, dans laquelle le composant d'acide gras est un mélange d'oléine de distillat d'acide gras de palme entièrement hydrogéné et de distillat d'acide gras laurique.

11. Matrice selon l'une des revendications précédentes, dans laquelle la matrice comprend :

   - de 1 % à 15 % en poids d'un produit de monobutyrine, de préférence de 3 % à 12 % en poids, plus préférablement de 5 % à 10 % en poids ;
   - de 55 % à 95 % en poids d'oléine de distillat d'acide gras de palme entièrement hydrogéné, de préférence de 65 % à 85 % en poids, plus préférablement de 70 % à 80 % en poids ; et
   - de 0 % à 30 % en poids de distillat d'acide gras laurique, de préférence de 10 % à 25 % en poids, plus préférablement de 15 % à 20 % en poids.

12. Utilisation de la matrice selon l'une quelconque des revendications précédentes dans un produit alimentaire pour animaux en tant qu'ingrédient nutritionnel protégé dans le rumen.

13. Produit alimentaire pour animaux comprenant la matrice selon l'une quelconque des revendications 1 à 11, dans lequel le produit comprend en outre éventuellement un ou plusieurs ingrédients choisis parmi des protéines, des acides aminés, des vitamines, des graisses, des glucides, des minéraux, des fibres, des composés azotés non protéiques, des médicaments et des mélanges de ceux-ci .

14. Procédé de préparation de la matrice selon l'une quelconque des revendications 1 à 11, comprenant les étapes de :

> a) fourniture d'au moins un composant d'acide gras ;
> b) fourniture d'au moins un composant d'ester d'acide butyrique ;
> c) mélange des composants fournis à l'étape a) et b) ;
> d) poudrage de la matrice à partir du mélange préparé à l'étape c), de préférence au moyen de la congélation par pulvérisation.

15. Procédé selon la revendication 14, dans lequel le mélange préparé à l'étape c) comprend :

> - de 1 % à 15 % en poids de produit de monobutyrine, de préférence de 3 % à 12 % en poids, plus préférablement de 5 % à 10 % en poids ;
> - de 55 % à 95 % en poids d'oléine de distillat d'acide gras de palme entièrement hydrogéné, de préférence de 65 % à 85 % en poids, plus préférablement de 70 % à 80 % en poids ; et
> - de 0 % à 30 % en poids de distillat d'acide gras laurique, de préférence de 10 % à 25 % en poids, plus préférablement de 15 % à 20 % en poids.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3000329 A1
- EP 1800546 A1
- WO 2011128871 A
- EP 2666364 A1
- EP 0070868 A1
- EP 0424055 B1
- WO 2010066397 A
- EP 1354520 A1

- CN 103609866 A
- EP 2727472 A1
- EP 2410871 B1
- WO 2018137938 A
- WO 2016154574 A
- US 5928687 A
- WO 2018137939 A

**Non-patent literature cited in the description**

- **GÄBEL G et al.** *Anim Health Res Rev,* 2002, vol. 3 (1), 15-30